# EUROPEAN PATENT APPLICATION

(11) **EP 1 675 371 A1**
(43) Date of publication of application: **28.06.2006**
(21) Application number: 05027287.1
(22) Date of filing: 14.12.2005
(51) Int. Cl.: H04M 3/48, G06Q 10/00

(54) **Providing presence information of callers and/or senders of messages**

(30) Priority: 23.12.2004 US 21705
(71) Applicant: Alcatel, 75008 Paris (FR)
(72) Inventor: Fuming, Wu, Frisco, TX 75035 (US); Aziz, Mohammed, Plano, TX 75024 (US)
(74) Representative: Dreiss, Fuhlendorf, Steimle & Becker

(57) **Abstract**

The application relates to a computer program that when a user (170) logs-on to a communication log (400) to view the history of missed and successful attempted communication sessions for the user, the log-on event triggers the communications manager (350) to modify the status of the user's (170) presence subscription via the presence server (160) to receive presence information and preference information of the presentities in the "To Be Subscribed" list (420). The presentities in the "To Be Subscribed" list (420) are the initiators of the attempted communication sessions. The attempted communication sessions include voice communication sessions, text communication sessions and multimedia communication sessions such as PSTN calls, e-mail messages, instant messages, VoIP calls etc.

## Description

### BACKGROUND OF THE INVENTION

### Technical Field of the Invention

The present invention relates in general to a presence-based interactive communications system, and in particular, to communications log applications using presence services.

### Description of Related Art

Presence-based interactive communication services are callee-centric, where callees (presentities) publish, in real time, their presence information (such as, the availability, activity, local time, location, current status of the active devices/applications and the corresponding preferences, etc.) to callers (presence watchers). The presence information is designed to enable the callers to more efficiently and effectively contact the callees. Existing presence-enabled applications utilize a presence subscription procedure that involves the direct interaction of users (i.e., the watcher and the presentity) through their respective clients/presence user agents via the corresponding proxy presence servers. Thus, presence services currently require asynchronous, on-line input of small pieces of data by both the presentity and the watcher.

The lack of automatic mechanisms for subscribing and unsubscribing to presence services imposes restrictions on the scope of available presence-enabled services. Since current presence services only provide real-time presence information of presentities to watchers, a watcher is not able to ascertain future presence information of a presentity unless the watcher subscribes to the presence service at a future point in time. This time-constraint on presence information may be undesirable in some applications.

For example, in a call log application that maintains a record of each voice communication session for a user, in order to respond a logged missed call, the user currently must first determine the caller's preferred contact method and then attempt to initiate a follow-up communication session with the caller. Existing call log solutions are single-functional only in creating and maintaining logs for incoming and outgoing voice calls, without providing information on a caller's preferred contact method. Although a few available solutions do allow users to initiate a voice call from the call log, due to the lack of the callees' real-time availability information (presence and preference information), the efficiency of such voice communication attempts is poor.

Since presence service must be clearly subscribed to and authorized from the presentities whose real-time status (presence and preference information) the user is interested in ascertaining, the user must first determine the contacting address of the initiator of a missed communication session in order to subscribe to the presence and preference information of the initiator. For example, assuming the initiator is not a buddy of the user, and both the user and the initiator are working for the same enterprise, which has installed a presence-enhanced active directory (AD), the user can search the enterprise AD to find the initiator and obtain the initiator's current availability and communications preference. Once the contacting address and presence status of the initiator is determined, the user can attempt to establish a communication session using the proper communication medium that matches the communications preference of the initiator.

However, the above-described missed call response procedure is quite complex for the user. Moreover, missed communication session attempts are not be limited to voice communications, but rather include other communications types such as text and multimedia communications, which call log applications do not currently support.

Therefore, what is needed is a presence system and method for providing a multi-functional communications log capable of supporting multiple communication media types. In addition, what is needed is multi-functional communications log capable of automatically subscribing a user to receive presence information of missed communication session initiators and receivers to simplify and improve the efficiency of the user's missed communication session response procedure.

### SUMMARY OF THE INVENTION

Embodiments of the present invention provide a presence system including a multi-functional communications log capable of maintaining communication session information pertaining to attempted communication sessions with a user. The presence system further includes a communications manager capable of detecting a user-initiated communications log event and automatically and temporarily subscribing the user to receive presence information of presentities associated with the attempted communication sessions in response to detection of the user-initiated communications log event. For example, in one embodiment, the user-initiated communications log event occurs when a user logs-on to the communications log. The attempted communication sessions include voice communication sessions, text communication sessions and multimedia communication sessions. In addition, each presentity is either an initiator or a receiver of a communication session attempt with the user.

In a further embodiment, the communications manager is also operable to add a particular presentity to a list of presentities associated with the attempted communication sessions in response to a failed communication session attempt with the particular presentity.

In still a further embodiment, the communications manager is further operable to automatically and temporarily subscribe the user to receive both presence information and preference information of the presentities. The communications manager enables the user to attempt to establish an additional communication session with one of the presentities using the presence and preference information of that presentity.
In another embodiment, the communication session information includes a communication entry for each of the attempted communication sessions. Each communication entry can include one or more of a communication subject, presentity information, a communication media and a communication address of the presentity. In addition, each communication entry can provide a link to communication logic to automatically initiate a communication session with the presentity using the communication media and communication address of the presentity. Furthermore, each communication entry can include a link to a mail message associated with the communication session attempt, and a link for the user to add the presentity to a buddy list of the user. In yet another embodiment, the communications log is operable to provide a sort feature to enable the user to sort the communication entries.

Advantageously, embodiments of the present invention provide the ability to temporarily monitor the related parties' presence and preference information at the time of the user's access to the log application. In addition, embodiments of the present invention provide the user an efficient way to contact a subscriber based on the subscriber's availability and media preference. Furthermore, embodiments of the present invention support a large set of new features and create a more powerful communications log application.

### BRIEF DESCRIPTION OF THE DRAWINGS

A more complete understanding of the present invention may be obtained by reference to the following detailed description when taken in conjunction with the accompanying drawings wherein:
FIGURE 1 illustrates an exemplary presence system for providing presence services, in accordance with embodiments of the present invention;
FIGURE 2 is a block diagram illustrating an exemplary event system for providing event services, in accordance with embodiments of the present invention;
FIGURE 3 illustrates an exemplary presence system incorporating event services to provide event-driven presence subscription, in accordance with embodiments of the present invention;
FIGURE 4 illustrates an exemplary presence system providing a multi-functional communications log;
FIGURE 5 is a flowchart illustrating an exemplary process for using a multi-functional communications log based on event-driven presence subscription; and
FIGURE 6 is a flowchart illustrating an exemplary process for maintaining a multi-functional communications log, in accordance with embodiments of the present invention.

### DETAILED DESCRIPTION OF THE DRAWINGS

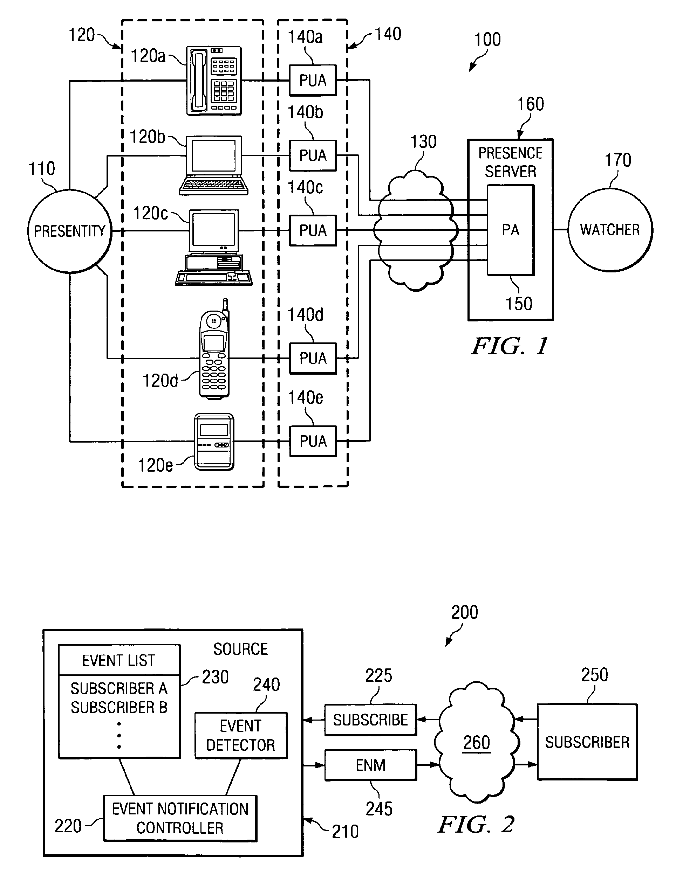

Referring to FIGURE 1, there is illustrated an exemplary presence system 100 capable of implementing various embodiments of the present invention. The presence system 100 includes a presentity 110 and one or more devices 120 associated with the presentity 110. The presentity 110 represents the callee and provides presence information on the callee's presence status to the presence system 100. Each device 120 is a physical communications device capable of sending and/or receiving communications over a communications network 130. Examples of such devices 120 include, but are not limited to, a desktop phone 120a, a laptop computer 120b, a personal computer 120c, a cell phone 120d and a personal digital assistant (PDA) 120e. In FIGURE 1, the communications network 130 represents any type of network over which media (circuit-switched or packet-switched voice or data) may be sent. For example, the communications network 130 can include the Public Switched Telephone Network (PSTN), Public Land Mobile Network (PLMN), one or more private local area networks (LANs), the Internet and/or any other type or combination of networks.

The presence system 100 further includes one or more presence user agents 140 (PUAs), a presence agent (PA) 150, a presence server 160 and one or more watchers 170 of the presentity 110. The PUAs 140 are capable of manipulating and providing presence information for the presentity 110. In FIGURE 1, a separate PUA 140 is shown for each device 120. However, it should be understood that in other embodiments, the number of PUAs 140 can vary based on the number and type of devices 120, the applications supported by the devices 120 and the system configuration. Each PUA 140 independently generates a component of the overall presence information for a presentity 110. Typically, PUA's 140 generate presence information when a change in presence status occurs. Examples of changes in presence status include, but are not limited to, turning on and off a device 120, modifying the registration from a device 120 and changing the instant messaging status on a device 120.

The presence information from each of the PUAs 140 is collected by one or more presence agents (PAs) 150. In FIGURE 1, only one PA 150 is shown for simplicity. However, it should be understood that in other embodiments, there can be multiple PAs 150 for a presentity 110, each of which is responsible for a subset of the total subscriptions (requests for presence information from watchers 170) currently active for the presentity 110. The PA 150 maintains the current complete presence information for the presentity 110 and provides the presence information to one or more watchers 170 (callers) of the presentity 110. The presence server 160 is a physical entity that can operate as either the PA 150 or as a proxy server for routing requests from watchers 170 to the PA 150. Thus, the PA 150 in combination with the presence server 160, is operable to receive presence information of the presentity 110 from the PUAs 140, receive requests from watchers 170 for the presence information and provide the presence information to the watcher(s) 170. When acting as a PA 150, the presence server 160 can also be co-located with a PUA 140.

The presence system 100 uses a presence protocol to provide presence services to presentities 110 and watchers 170. An example of a presence protocol that can be used in the presence system 100 is the Session Initiation Protocol (SIP), as described in J. Rosenberg, et al., "SIP: Session Initiation Protocol" RFC: 3261, June 2002 and in A. Roach, et al., "Session Initiation Protocol (SIP) - Specific Event Notification," RFC: 3265, June 2002, each of which are hereby incorporated by reference. SIP is an application-layer control protocol used to create, modify and terminate communication (voice, text and/or multimedia) sessions. SIP can be used with other protocols, such as the Real-time Transport Protocol (RTP), the Real-Time Streaming Protocol (RTSP), the Session Description Protocol (SDP), the International Telecommunication Union - Telecommunications ("ITU-T") H.263 standard (video CODEC), the G.711 and G.729 standards (audio CODECs), and other or additional standards or protocols. As will be appreciated, other or additional protocols and configurations may be used.

SIP networks are capable of routing requests from any user on the network to the server that maintains the registration state for a user. Thus, SIP networks enable a caller (watcher) to transmit a SUBSCRIBE request for presence information relating to a particular callee (presentity 110) to be routed to the presence server 160 that maintains the presence information for the presentity 110. In operation, the presence server 160 and PA 150 may be co-located with the SIP proxy/registrar for efficiency purposes.

FIGURE 2 is a block diagram illustrating an exemplary event system 200 for providing event services, in accordance with embodiments of the present invention. In general, event services enable an entity of interest (e.g., source 210) to advertise (e.g., by e-mail, web pop-up advertisements, voice, fax or other advertising means) the event services they want to provide to interested parties (e.g., subscriber 250). For example, each event service can correspond to a particular type of event (e.g., sports scores, stock quotes, news and other information). The subscribers 250 specify the events they are interested in by subscribing to one or more event services provided by the source 210.

The source 210 maintains a list 230 of subscribers subscribing to a particular event service. The list 230 can include subscribers 250 that have specifically subscribed to receive event notification messages 245 (e.g., sent a subscribe message 225 to the source 210), subscribers 250 that have not opted out of the event service and/or subscribers 250 that have shown an interest in the type of information included in the event notification messages 245. The source 210 further includes an event detector 240 operable to detect the occurrence of an event and trigger an event notification controller 220 to create an event notification message 245 for each subscriber 250 on the list 230 that has subscribed to the event service. As used herein, the term "controller" means any device, system or part thereof that controls at least one operation, which can be implemented in hardware, software, firmware, or some combination of the above. It should be noted that the functionality associated with the controller may be centralized or distributed, whether locally or remotely.

The source 210 publishes event notification messages 245 and delivers the event notification messages 245 to the subscriber(s) 250 via a communications network 260 (e.g., PSTN, PLMN, LAN, the Internet and/or any other type or combination of networks). For example, the source 210 can transmit the event notification message 245 via e-mail, instant message, text message, voice message, facsimile or other type of message delivery system.

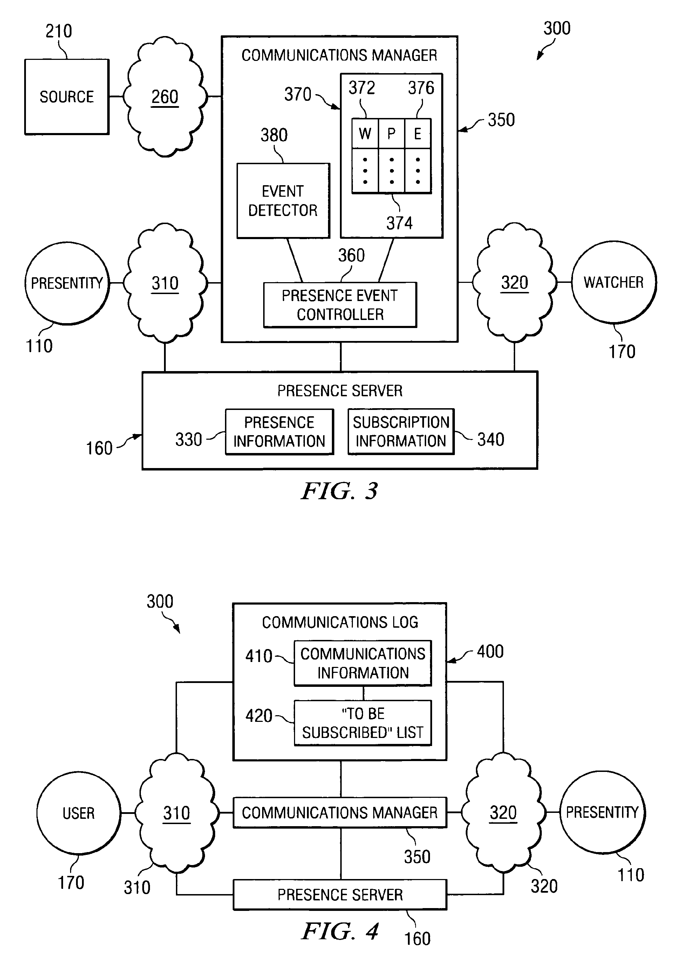

FIGURE 3 is a block diagram illustrating an exemplary presence system 300 incorporating event services to provide event-driven presence subscription, in accordance with embodiments of the present invention. To combine presence services with event services, a communications manager 350 is provided that is designed as a client supporting both event services and presence services. The communications manager 350 includes a presence event controller 360, a memory 370 and an event detector 380. The memory 370 is configured to store watcher information 372, presentity information 374 and event information 376. The watcher information 372 can include, for example, watcher identities identifying each watcher 170 subscribed to the presence/event service. In addition, the watcher information 372 can include watcher preferences defined by the watcher 170.

For example, in one embodiment in accordance with the invention, the watcher preferences may instruct the communications manager 350 to subscribe the watcher 170 to presence services upon the detection of an event, such as a user-initiated communications log event (e.g., the user/watcher logs-on to the communications log application). In a further embodiment, the watcher preferences may include subscription authorization information to enable the communications manager 350 to subscribe/unsubscribe the watcher 170 to presence services. For example, the subscription authorization information can include a user identifier (uri) and password of the watcher 170, a presence server address of a presence server 160 associated with the watcher 170 and presence filtering information specifying the particular presence information 330 to be provided to the watcher 170.

The presentity information 374 can be associated with a particular watcher identity, and can include, for example, one or more presentity identities identifying presentities 110 the watcher 170 is interested in monitoring. Each presentity identity can further be associated with event information 376, including an event description identifying the particular event(s) that trigger the communications manager 350 to subscribe/unsubscribe the watcher 170 to presence services. For example, in accordance with embodiments of the present invention, the event information 376 can include a user-initiated communications log event.

It should be understood that the memory 110 includes any type of data storage device, including but not limited to, a hard drive, random access memory (RAM), read only memory (ROM), compact disc, floppy disc, ZIP® drive, tape drive, database or other type of storage device or storage medium.

The event detector 380 is capable of detecting the occurrence of an event specified in the event information 376 and trigger the presence event controller 360 to modify the status of the presence subscription of the watcher 170 based on the watcher information 372. The presence subscription of the watcher 170 is stored in the presence server 160 as subscription information 340, and indicates whether the watcher 170 is either subscribed to receive presence information 330 of the presentity 110 or unsubscribed to not receive presence information 330 of the presentity 110.

In one embodiment, the event detector 380 interfaces with an event system to precisely express, by means of the correctness of subscription semantics, to the event system, the events the communications manager 350 wants to subscribe to. The event detector 380 is further capable of receiving event notification messages from the source 210 of the event information via the event communication network 260. Upon receipt of the event notification message, the event detector 380 triggers the presence event controller 360 to modify the status of the watcher's presence subscription in the subscription information 340 stored in the presence server 160 based on the watcher preferences stored in the memory 370.

In another embodiment, the event detector 380 captures the occurrences of local events of interest associated with the presentity 110, the watcher 170 or both the presentity 110 and the watcher 170. For example, a local event of interest in accordance with embodiments of the present invention can include a log-on event of the user/watcher to a communications log application. Upon the detection of a local event of interest (as specified in the event information 376), the event detector 380 triggers the presence event controller 360 to modify the status of the watcher's presence subscription in the subscription information 340 stored in the presence server 160 based on the watcher preferences stored in the memory 370.

The presence event controller 360 is operable to map events detected by the event detector 380 to presence subscribing / unsubscribing actions using information 372, 374 and 376 stored in the memory 370. The presence event controller 360 automatically (e.g. without user input) performs the subscription / unsubscription of the other parties' (the presentities 110, in connection with presence services) presence on behalf of the user (the watcher, in connection with presence services) upon receiving the event notification message or observing the local stimulating event triggering the subscription/ unsubscription activity. The presence event controller 360 communicates with the presence server 160 to automatically modify the status of the presence subscription of the watcher 170 to presence information 330 of the presentity 110, as indicated in the subscription information 340 stored in the presence server 160. In addition, the presence event controller 360 communicates with the presence server 160 to monitor the presence status of the presentity 110 and/or watcher 170 to enable the event detector 380 to detect the occurrence of an event specified in the event information 376.

The presence event controller 360 is further operable to monitor events associated with the presentity 110 via communication network 310, and to monitor events associated with the watcher 170 via communication network 320. Communication networks 310 and 320 include any type of network, such as PSTN, PLMN, LAN, Internet or other type of network. In addition, communication networks 310 can be the same communication network or different communication networks (e.g., with a remote presentity 110).

Once the watcher's presence subscription status is automatically modified in the subscription information 340 in the presence server 160, the presence server 160 operates to provide presence services to the watcher 170 based on the presence subscription status. For example, if the communications manager 350 modifies the status of the watcher's presence subscription from unsubscribe to subscribe, the presence server 160 provides the presence information 330 of the presentity 110 to the watcher 170. The presence event controller 360 can use the subscription authorization information (e.g., uri, password, proxy (presence server) address, presence filtering, etc.) provided by the watcher and stored in the watcher information 373 in the memory 370 to modify the status of the presence subscription of the watcher 170 in the presence server 160.

It should be noted that the communications manager 350 may be constructed or configured using hardware, software, firmware, or combination thereof for detecting events and modifying the status of a watcher's presence subscription to presence information of a presentity. As an example, the communications manager 350 could include one or more processors that execute instructions and one or more memories that store instructions and data used by the processors. The processor is generally understood to be a device that drives a general-purpose computer. It is noted, however, that other processor devices such as microcontrollers, Field Programmable Gate Arrays (FPGAs), or Application Specific Integrated Circuits (ASICs), or a combination thereof, can be used as well and achieve the benefits and advantages described herein.

In one embodiment, the communications manager 350 can include one or more processes, such as software applications providing an activity, a function, or a systematic sequence of tasks that produces a specified result. For example, the communications manager 350 can be an application running on the presence server 160 or on a different node in the presence system.

FIGURE 4 illustrates an exemplary presence system 300 incorporating event services to provide a multi-functional communications log 400. The communications log 400 is an application that creates and maintains log entries of all incoming and outgoing attempted communication sessions (real-time and non-real-time), whether the attempted communication session was a successful communication session or a failed communication session, of a particular user/watcher 170. The attempted communication sessions can be of any media type, including, but not limited to, real-time or non-real-time voice, text and multimedia (video+).

The communications log 400 automatically records communication session information 410 of all incoming and outgoing communication sessions of the user 170. For example, the communication session information 410 can include the communications subjects for all incoming and outgoing communications sessions, caller/callee (presentity 110) information, the type of communication media used in the attempted communication session and a communication address of the presentity 110. The communication session information 410 is stored in communication entries, one for each attempted communication session.

The communications log 400 interfaces with the communications manager 350 to automatically subscribe to and monitor the presentities' presence information and communications preferences, such as the presentities' availability and currently available and preferred media type. The communications log 400 maintains a "To Be Subscribed" list 420 of presentities whose failed and/or successful communication session attempts are stored in the communication session information 410. The communications log 400 provides the "To Be Subscribed" list 420 to the communications manager 350 for use in automatically and temporarily subscribing the user 170 to receive the presence information and preference information of the presentities 110 in the list 420.

When the user 170 logs-on to the communications log 400 to view the history of missed and successful attempted communication sessions for the user, the log-on event triggers the communications manager 350 to modify the status of the user's 170 presence subscription via the presence server 160 to receive presence information and preference information of the presentities in the "To Be Subscribed" list 420. The presence and preference information of a particular presentity in the list 420 is displayed or otherwise provided to the user while viewing or otherwise retrieving the communications entry made for the attempted communication session with the particular presentity. Using the presence and preference information, the user 170 can efficiently and effectively attempt to initiate an additional communication session with the particular presentity via the communications manager 350.

For example, each communication entry in the communications log 400 can include a link provided to the user 170 that links the user 170 to communications logic within the communications manager 350 that is capable of automatically initiating a communication session with the particular presentity using the communication media and communication address of the presentity stored in the communication session information 410 of the communications log 400. Thus, the communications log 400 allows the user 170 to respond to a logged communication session using a one-click feature or button (i.e., "Push-To-Talk" / "Push-To-IM" /"Push-To-Email", etc.).

In addition, each communication entry in the communication session information 410 of the communications log 400 can include a link provided to the user 170 that links the user 170 to a mail message associated with the logged communication session attempt. Thus, the communications log 400 allows the user 170 to access the e-mail, voice-mail, or mm-mail for (or, attached to) a logged communication session using a one-click feature or button. Furthermore, each communication entry in the communication session information 410 of the communications log 400 can include a link provided to the user 170 that enables the user 170 to add the presentity associated with the communication entry to a buddy list of the user by a single button (e.g., an "add me to your buddy list" button). Moreover, each communication entry in the communication session information 410 of the communications log 400 can include a link provided to the user 170 that links the user 170 to additional information regarding the initiator (presentity 110) of a logged communication session stored in the communication session information 410 by a single button (e.g, a "learn more about me" button).

In further embodiments, the communications log 400 includes a sort feature that enables the user 170 to sort the communication entries. For example, the sort feature can allow the user 170 to fetch the latest five (or, any fixed number) communication log entries by time, subject or a specific presentity, via a single button. The sort feature can also allow the user to fetch the latest five (or, a fixed number) of follow-ups relevant to a specific subject (i.e., by thread) by a single button.

It should be noted that the communications log 400 may be constructed or configured using hardware, software, firmware, or combination thereof for maintaining a multi-functional log of incoming and outgoing attempted communication sessions with a user. As an example, the communications log 400 could include one or more processors that execute instructions and one or more memories that store instructions and data used by the processors. The processor is generally understood to be a device that drives a general-purpose computer. It is noted, however, that other processor devices such as microcontrollers, Field Programmable Gate Arrays (FPGAs), or Application Specific Integrated Circuits (ASICs), or a combination thereof, can be used as well and achieve the benefits and advantages described herein.

In one embodiment, the communications log 400 can include one or more processes, such as software applications providing an activity, a function, or a systematic sequence of tasks that produces a specified result. For example, the communications log 400 can be an application running on the communications manager 350, presence server 160 or on a different node in the presence system 300.

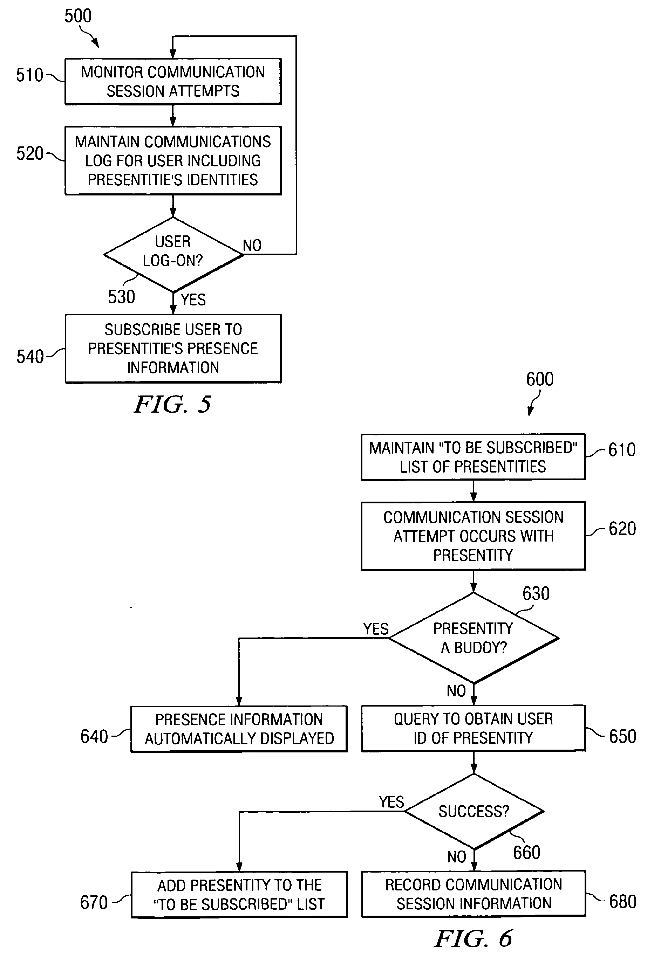

FIGURE 5 is a flowchart illustrating an exemplary process 500 for using a multi-functional communications log based on event-driven presence subscription. Initially, at block 510, the multi-functional communications log monitors all incoming and outgoing attempted communication sessions with the user, including real-time and non-real-time voice, text and multimedia communication sessions. At block 520, the communications log 400 automatically records communication session information for all incoming and outgoing communication sessions of the user. The communication session information includes the caller/callee (presentity) identities associated with at least the failed communication session attempts.

When the user logs-on to the communications log to view the history of missed and successful attempted communication sessions for the user at block 530, the log-on event triggers the communications manager to subscribe the user to receive presence and preference information of the presentities at block 540. Using the presence and preference information, the user can more efficiently and effectively attempt to initiate follow-up communication sessions with the presentities.

FIGURE 6 is a flowchart illustrating an exemplary process 600 for maintaining a multi-functional communications log, in accordance with embodiments of the present invention. Initially, at block 610, the communications log and/or communications manager maintains a "To Be Subscribed" list of presentities associated with attempted communication sessions with a user. At block 620, when a communication session attempt occurs between the user and a presentity, the communications log and/or communications manager determines if the presentity is already an individual buddy of the user (or, the watcher) or a member of at least one of the existing presentity groups the user (or, watcher) is monitoring at block 630. If the presentity is a buddy of the user, at the time the communications log/communications manager detects an event that indicates that the user (or, the watcher) is capable of accessing the multi-functional communications log, the presence information will be automatically displayed on the GUI of the communications log at block 640.

If the presentity is not a buddy of the user, at block 650 the communications log and/or communications manager queries the enterprise directory to obtain the presentity identity by using the contact address used in the communication session. If the presentity identity is successfully determined at block 660, the communications log and/or communications manager creates a new entry in the "To Be Subscribed" list with the presentity identity at block 670. Otherwise, at block 680, the communications log records the communication media and the communication address, and provides links to the proper 'Push-to' button(s) corresponding to the log entry.

The following features, separately or in any combination, may also constitute advantageous embodiments of the described or claimed invention:
- The claimed and/or described presence system, wherein said attempted communication sessions include at least one of voice communication sessions, text communication sessions and multimedia communication session;
- The claimed and/or described presence system, wherein each of said presentities in said list are one of an initiator or a receiver of a communication session attempt with said user;
- The claimed and/or described presence system, wherein each said communication entry includes a link to a mail message associated with said respective communication session attempt;
- The claimed and/or described presence system, wherein each said communication entry includes a link for said user to add said respective presentity to a buddy list of said user;
- The claimed and/or described presence system, wherein said communications log is further operable to provide a sort feature to enable said user to sort said communication entries;
- The claimed and/or described presence system, further comprising: a presence server capable of receiving and storing said presence information for said presentities in said list and subscription information for said user;
- The claimed and/or described method, further comprising the step of: providing a link in each said communication entry to a mail message associated with said respective communication session attempt;
- The claimed and/or described method, further comprising the step of: providing a link in each said communication entry for said user to add said respective presentity to a buddy list of said user;
- The claimed and/or described method, further comprising the step of: providing a sort feature to enable said user to sort said communication entries.

As will be recognized by those skilled in the art, the innovative concepts described in the present application can be modified and varied over a wide rage of applications. Accordingly, the scope of patents subject matter should not be limited to any of the specific exemplary teachings discussed, but is instead defined by the following claims.

## Claims

1. A presence system, comprising:
a communications log capable of maintaining communication session information pertaining to attempted communication sessions with a user, said communications log including a list of presentities associated with said attempted communication sessions; and
a communications manager capable of detecting a user-initiated communications log event, wherein said communications manager is operable to automatically and temporarily subscribe said user to receive presence information of said presentities in said list in response to detection of said user-initiated communications log event.

2. The presence system of Claim 1, wherein said communications manager is further operable to add a particular presentity to said list in response to a failed communication session attempt with said particular presentity.

3. The presence system of Claim 1, wherein said communications manager is further operable to automatically and temporarily subscribe said user to receive said presence information of said presentities in said list and preference information of said presentities in said list in response to detection of said user-initiated communications log event, and wherein said communications manager is further operable to attempt to establish an additional communication session with one of said presentities in said list using said presence information and said preference information.

4. The presence system of Claim 1, wherein communication session information includes a communication entry for each of said attempted communication sessions.

5. The presence system of Claim 4, wherein each said communication entry includes one or more of a communication subject, presentity information, a communication media and a communication address of said presentity.

6. The presence system of Claim 5, wherein each said communication entry provides a link to communication logic to automatically initiate a communication session with said respective presentity using said respective communication media and said respective communication address.

7. A method for providing a multi-functional communication log in a presence system, comprising the steps of:
maintaining a communications log of communication session information pertaining to attempted communication sessions with a user, said communications log including a list of presentities associated with said attempted communication sessions; detecting a user-initiated communications log event; and
in response to said detecting, automatically and
temporarily subscribing said user to receive presence information of said presentities in said list.

8. The method of Claim 7, further comprising the step of:
adding a particular presentity to said list in response to a failed communication session attempt with said particular presentity.

9. The method of Claim 7, wherein said step of subscribing further comprises the step of:
automatically and temporarily subscribing said user to receive said presence information of said presentities in said list and preference information of said presentities in said list in response to detection of said user-initiated communications log event; and
attempting to establish an additional communication session with one of said presentities in said list using said presence information and said preference information.

10. The method of Claim 7, wherein said step of maintaining further comprises the step of:
maintaining a communication entry for each of said attempted communication sessions.

11. The method of Claim 10, wherein each said communication entry includes one or more of a communication subject, presentity information, a communication media and a communication address of said presentity, and further comprising the step of:
providing a link in each said communication entry to communication logic to automatically initiate a communication session with said respective presentity using said respective communication media and said respective communication address.
